# EUROPEAN PATENT APPLICATION

(11) **EP 3 287 214 A1**
(43) Date of publication of application: **28.02.2018**
(21) Application number: 16782867.2
(22) Date of filing: 29.02.2016
(51) Int. Cl.: B23B 1/00, B23B 21/00, B23B 27/02

(54) **MACHINE TOOL AND CUTTING METHOD**

(30) Priority: 20.04.2015 JP 2015085744
(71) Applicant: Murata Machinery, Ltd., Kyoto-shi, Kyoto 601-8326 (JP)
(72) Inventor: ISHIHARA, Tadashi, Inuyama-shi Aichi 484-8502 (JP)
(74) Representative: Weickmann & Weickmann PartmbB
(86) International application number: PCT/JP2016/056012
(87) International publication number: WO 2016/170845

(57) **Abstract**

[Problem] To provide a machine tool and a cutting method that are able to machine a workpiece with high accuracy and to reduce the machining time.

[Solving Means] A machine tool 100 includes a main spindle 7 that rotates while holding a workpiece W, a holder 25 that holds a first cutting tool T1 and a second cutting tool T2 including a linear cutting blade H1 and a linear cutting blade H2 for cutting the workpiece W, and a moving device (M1, M2, M3) that moves the first cutting tool T1 and the second cutting tool T2 relative to the workpiece W in a moving direction including at least a Z-direction and a Y-direction. The holder 25 holds the first cutting tool T1 and the second cutting tool T2 in such a manner that the cutting tools are arranged along the moving direction in a state in which the directions of the linear cutting blades H1, H2 are inclined with respect to the Z-direction when seen from the X-direction and are not to be parallel with each other.

## Description

### TECHNICAL FIELD

The present invention relates to a machine tool and a cutting method.

### BACKGROUND ART

A lathe, which is one of machine tools, holds a workpiece to be machined, on the rotating shaft (spindle) and performs cutting or the like on the workpiece using a cutting tool while rotating the workpiece. As a machining method using a lathe, for example, there is known a method of cutting a workpiece while feeding a cutting tool in a tangential direction of the workpiece (a direction crossing the rotating shaft) (for example, see Patent Literature 1).

### [Citation List]

### [Patent Literature]

[Patent Literature 1] Japanese Patent No. 3984052

### SUMMARY OF INVENTION

### Technical Problem

If the machining method disclosed in Patent Literature 1 is used, the workpiece or cutting tool may be deformed during cutting, and the machining dimension may deviate from the design value. In particular, if the workpiece is cut by a large amount, the cutting force is increased. Thus, the deformation of the workpiece or cutting tool may be increased, and the machining dimension may significantly deviate from the predetermined value. For this reason, the machining dimension is conventionally matched to the design value by cutting the workpiece multiple times, for example, by roughly cutting the workpiece in the first cutting and finishing the workpiece in the second cutting. However, cutting the workpiece multiple times requires returning the cutting tool to the original position after the first cutting and then cutting the workpiece again. This disadvantageously increases the distance traveled by the cutting tool and increases the machining time.

Also, the linear cutting blade of the cutting tool is disposed so as to be inclined with respect to the direction of the generating line of the cut portion of the workpiece by a predetermined angle. Changing the predetermined angle causes a change in the roughness of the cutting surface of the workpiece W. For this reason, the linear cutting blade of a cutting tool used to roughly cut the workpiece is preferably set to a direction suitable for rough machining, while the linear cutting blade of a cutting tool used to finish the workpiece is preferably set to a direction suitable for finish machining.

In view of the foregoing, an object of the present invention is to provide a machine tool and a cutting method that are able to machine a workpiece with high accuracy and to reduce the machining time.

### Solution to Problem

A machine tool of the present invention includes a main spindle that rotates while holding a workpiece, a holder that holds multiple cutting tools including linear cutting blades for cutting the workpiece, and a moving device that moves the cutting tools relative to the workpiece in a moving direction including at least a Y-direction perpendicular to both a Z-direction parallel with an axis of the main spindle and an X-direction that is perpendicular to the Z-direction and determines the amount of the workpiece to be cut. The holder holds the cutting tools in such a manner that the cutting tools are arranged along the moving direction in a state in which directions of the linear cutting blades are inclined with respect to the Z-direction when seen from the X-direction and are not to be parallel with each other.

The holder may hold the cutting tools in such a manner that an angle with respect to the Z-direction, of the linear cutting blade of the cutting tool disposed in front in the moving direction, of the cutting tools becomes greater than an angle with respect to the Z-direction, of the linear cutting blade of the cutting tool disposed in the rear in the moving direction, thereof. The moving direction may be the Y-direction, or a direction obtained by combining the Z-direction and the Y-direction. The holder may hold the cutting tools in such a manner that positions of the linear cutting blades are the same in the X-direction. The holder may hold the cutting tools in such a manner that the linear cutting blade of the cutting tool disposed in the rear in the moving direction, of the cutting tools protrudes in the X-direction toward the workpiece compared to the linear cutting blade of the cutting tool disposed in front in the moving direction, thereof. The holder may hold the cutting tools in such a manner that the cutting tools are spaced from each other in the Y-direction so that a front end of the linear cutting blade of the cutting tool disposed in the rear in the moving direction, of the cutting tools is disposed in the rear in the moving direction compared to a rear end of the linear cutting blade of the cutting tool disposed in front in the moving direction, thereof. The linear cutting blades of the cutting tools may have the same lengths perpendicular to the moving direction.

A method for cutting the workpiece using the above machine tool includes cutting the workpiece using the cutting tool disposed in front in the moving direction, of the cutting tools and then cutting the workpiece using the cutting tool disposed in the rear in the moving direction, thereof.

Main machining may be performed on the workpiece using the cutting tool disposed in front in the moving direction, and finish machining may be performed on the workpiece using the cutting tool disposed in the rear in the moving direction. The cutting method may include if the moving direction is the direction obtained by combining the Z-direction and the Y-direction, adjusting angles with respect to the Z-direction, of the linear cutting blades disposed in front and in the rear in the moving direction on the basis of the amount of movement in the Z-direction prior to cutting the workpiece.

### Advantageous Effects of Invention

According to the machine tool of the present invention, the multiple cutting tools are held by the holder. Thus, when multiple cutting steps are performed on the workpiece W, for example, when main machining (rough machining) and finish machining are performed thereon, the moving distance of the cutting tools is reduced. As a result, it is possible to reduce the machining time while maintaining the machining accuracy. Also, the linear cutting blades are not parallel with each other. Thus, by setting machining using the front cutting tool and machining using the rear cutting tool to angles suitable for the respective types of machining, it is possible to machine the workpiece with high accuracy so that the roughness of the cutting surface is improved.

If the holder holds the cutting tools in such a manner that the angle with respect to the Z-direction, of the linear cutting blade of the cutting tool disposed in front in the moving direction, of the cutting tools becomes greater than the angle with respect to the Z-direction, of the linear cutting blade of the cutting tool disposed in the rear in the moving direction, thereof, it is possible to perform main machining (rough machining) using the front cutting tool and to perform finish machining using the rear cutting tool so that the surface roughness is reduced. If the moving direction is the Y-direction, or the direction obtained by combining the Z-direction and the Y-direction, the workpiece can be cut using the multiple cutting tools by only moving the holder once. If the holder is moved in the direction obtained by combining the Z-direction and the Y-direction, the region which is wide in the Z-direction, of the workpiece is cut. Thus, the moving distance of the holder is reduced, allowing the machining time to be reduced. If the holder holds the cutting tools in such a manner that the positions of the linear cutting blades are the same in the X-direction, the tools are disposed in such a manner that the amounts of the workpiece to be cut by the tools are equalized. Thus, a cutting error made by the front linear cutting blade can be corrected by the rear linear cutting blade. That is, the workpiece can be machined with high accuracy. If the holder holds the cutting tools in such a manner that the linear cutting blade of the cutting tool disposed in the rear in the moving direction, of the cutting tools protrudes in the X-direction toward the workpiece compared to the linear cutting blade of the cutting tool disposed in front in the moving direction, thereof, multiple cutting steps can be performed on the workpiece with high accuracy in a short time. If the front end of the rear linear cutting blade and the rear end of the front linear cutting blade are spaced from each other in the Y-direction, the workpiece is cut using the rear cutting tool after the front cutting tool leaves the workpiece. Thus, it is possible to eliminate the flexure or the like of the workpiece caused by the front cutting tool when cutting the workpiece using the rear cutting tool and to cut the workpiece with high accuracy using the rear cutting tool. If the linear cutting blades of the cutting tools have the same lengths perpendicular to the moving direction, the cutting ranges of the workpiece are equalized. Thus, the ranges cut using the cutting tools are made the same.

According to the cutting method of the present invention, with the multiple cutting tools disposed, the workpiece is cut using the front cutting tool and then cut using the rear cutting tool. Thus, multiple cutting steps such as main machining (rough machining) and finish machining can be performed on the workpiece with high accuracy in a short time. Also, the linear cutting blades are not parallel with each other. Thus, by setting machining using the front cutting tool and machining using the rear cutting tool to angles suitable for the respective types of machining, it is possible to machine the workpiece with high accuracy so that the roughness of the cutting surface is improved.

If main machining is performed on the workpiece using the cutting tool disposed in front in the moving direction and finish machining is performed on the workpiece using the cutting tool disposed in the rear in the moving direction, multiple cutting steps such as main machining (rough machining) and finish machining can be performed on the workpiece. If, in case that the moving direction is the direction obtained by combining the Z-direction and the Y-direction, the cutting method includes adjusting the angles with respect to the Z-direction, of the linear cutting blades disposed in front and in the rear in the moving direction on the basis of the amount of movement in the Z-direction prior to cutting the workpiece, the workpiece can be cut with high accuracy by adjusting the front and rear linear cutting blades to angles suitable for the respective types of machining.

### BRIEF DESCRIPTION OF DRAWINGS

FIG. 1 includes drawings showing an example of a major part of a machine tool of a first embodiment, in which FIG. 1(a) is a side view; and FIG. 1(b) is a front view.
FIG. 2 is an enlarged perspective view showing a part corresponding to a workpiece.
FIG. 3 includes perspective views showing an example of a state in which a holder is mounted on a tool head.
FIG. 4 includes drawings showing the positional relationship between a first cutting tool and a second cutting tool held by the holder.
FIG. 5 is a flowchart showing an example of the operation of the cutting tools.
FIG. 6 includes drawings showing an example of the operation of the cutting tools when the workpiece is seen from an X-direction.
FIG. 7 is a flowchart showing another example of the operation of the cutting tools.
FIG. 8 includes drawings showing another example of the operation of the cutting tools when the workpiece is seen from the X-direction.
FIG. 9 includes drawings showing another example of the operation of the cutting tools following FIG. 8.
FIG. 10 is a drawing showing an example of a major part of a machine tool of a second embodiment.
FIG. 11 includes flowcharts showing an example of the operation of cutting tools.
FIG. 12 is a drawing an example of a major part of a machine tool of a third embodiment.
FIG. 13 includes drawings showing an example of the operation of cutting tools when a workpiece is seen from the X-direction.
FIG. 14 includes drawings showing another example of the operation of the cutting tools when the workpiece is seen from the X-direction.

### DETAILED DESCRIPTION

Now, embodiments of the present invention will be described with reference to the drawings. However, the present invention is not limited thereto. To clarify the embodiments, the drawings are scaled, for example, partially enlarged or highlighted, as necessary. In the drawings, directions are shown by an XYZ coordinate system. In the XYZ coordinate system, a plane parallel with the horizontal plane is defined as a YZ plane; the direction of the rotation axis of a main spindle 7 (a counter spindle 8) in the YZ plane is defined as a Z-direction; the direction perpendicular to the Z-direction in the YZ-plane is defined as a Y-direction; the direction perpendicular to the YZ-plane is defined as an X-direction; and the X-axis is a direction that is perpendicular to the Z-direction and determines the amount of workpiece to be cut. In the drawings, the directions of arrows represent the positive X-, Y-, and Z-directions, and the directions opposite to the directions of the arrows represent the negative X-, Y-, and Z-directions.

### <First Embodiment>

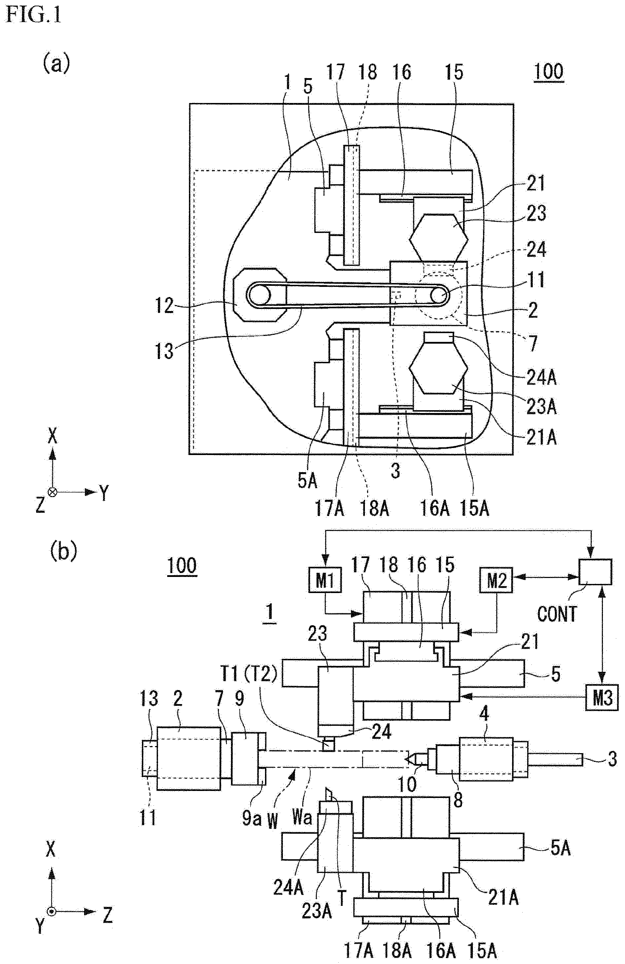

A machine tool 100 of a first embodiment will be described with reference to the drawings. FIG. 1 includes drawings showing an example of a major part of the machine tool 100 of the first embodiment, in which FIG. 1(a) is a side view; and FIG. 1(b) is a front view. The machine tool 100 shown in FIG. 1 is a lathe. In FIG. 1, the front side of the machine tool 100 is located on the positive Y-side, and the back side thereof is located on the negative Y-side. The lateral sides of the machine tool 100 are located on the positive and negative Z-sides, and the Z-direction represents the left-right direction of the machine tool 100.

As shown in FIG. 1, the machine tool 100 includes a base 1. The base 1 is provided with a headstock 2 and a tailstock 4. The headstock 2 rotatably supports a main spindle 7 with a bearing or the like (not shown) therebetween. While the headstock 2 is fixed to the base 1, it may be formed so as to be movable in the Z-, X-, Y-, or other directions by the drive of a motor or the like. The main spindle 7 has a chuck driver 9 at the positive Z-side end thereof. The chuck driver 9 causes multiple grasping claws 9a to move in the radial direction of the main spindle 7 and to hold a workpiece W. While, in FIG. 1, the workpiece W is grasped by three grasping claws 9a equally spaced around the rotation axis of the main spindle 7, other configurations may be used. The number or shape of the grasping claws 9a may be any number or shape as long as they are able to hold the workpiece W. The workpiece W grasped by the grasping claws 9a is formed in a shape having a cylindrical surface Wa (e.g., a cylindrical shape).

The negative Z-side end of the main spindle 7 protrudes from the headstock 2 in the negative Z-direction and has a pulley 11 mounted thereon. A belt 13 runs between the pulley 11 and the rotation axis of a motor 12 disposed in the base 1. Thus, the main spindle 7 is rotated by the drive of the motor 12 through the belt 13. The number of revolutions or the like of the motor 12 is controlled in accordance with an instruction from a controller (not shown). The motor 12 is, for example, a motor including a torque controller. The main spindle 7 need not be driven by the motor 12 and belt 13; the drive of the motor 12 may be transmitted to the main spindle 7 through a gear train or the like, or the motor 12 may directly rotate the main spindle 7.

The tailstock 4 is formed so as to be movable along a Z-direction guide 3 disposed on the base 1. The tailstock 4 rotatably supports the counter spindle 8 with a bearing or the like (not shown) therebetween. The directions of the rotation axes of the main spindle 7 and the counter spindle 8 are aligned with the Z-direction. The tailstock 4 has a center 10 mounted on the negative Z-side end thereof. The counter spindle 8 may be fixed to the tailstock 4 and used as a dead center.

If the workpiece W has a long length (is long in the Z-direction) as shown by a dot-and-dash line in FIG. 1(b), the positive Z-side end of the workpiece W is held by the center 10 of the tailstock 4. Thus, the long workpiece W is rotated while being sandwiched between the main shaft 7 and counter spindle 8. As a result, the workpiece W can be rotated stably during cutting. If the workpiece W has a short length (is short in the Z-direction), it is rotated while being held by only the grasping claws 9a of the main spindle 7. In this case, the tailstock 4 need not be used.

As shown in FIGS. 1(a) and 1(b), the base 1 is provided with a Z-direction guide 5 disposed along the Z-direction. Similarly, a Z-direction guide 5A is disposed along the Z-direction in a negative X-position of the Z-direction guide 5. The Z-direction guides 5 and 5A are provided with Z-axis slides 17, 17A, respectively, that can move in the Z-direction along the Z-direction guides 5 and 5A. As shown in FIG. 1(b), the Z-axis slide 17 is moved in the Z-direction by the drive of a Z-direction drive system (moving device) M1 and held in position. The Z-direction drive system M1 is, for example, an electric motor or hydraulic system. The Z-axis slide 17A is provided with a drive system similar to the Z-direction drive system M1, and is moved in the Z-direction by the drive of this drive system and held in position. The configuration of the Z-axis slide 17A may be the same as or different from that of the Z-direction drive system M1.

The Z-axis slides 17, 17A have X-direction guides 18, 18A, respectively, thereon. The Z-axis slides 17, 17A are also provided with X-axis slides 15, 15A, respectively, that can be moved along the X-direction guides 18, 18A. The X-axis slide 15 is moved in the X-direction by the drive of an X-direction drive system (a moving device) M2 and held in position. The X-direction drive system M2 is, for example, an electric motor or hydraulic system. The X-axis slide 15A is provided with a drive system similar to the X-direction drive system M2, and is moved in the X-direction by the drive of this drive system and held in position. The configuration of the drive system of the X-axis slide 15A may be the same as or different from that of the X-direction drive system M2.

The X-axis slides 15, 15A have Y-direction guides 16, 16A, respectively, thereon. The X-axis slides 15, 15A are also provided with tool post drivers 21, 21A, respectively, that can be moved along the Y-direction guides 16, 16A. The tool post driver 21 is moved in the Y-direction by the drive of a Y-direction drive system (a moving device) M3 and held in position. The Y-direction drive system M3 is, for example, an electric motor or hydraulic system. The tool post driver 21A is provided with a drive system similar to the Y-direction drive system M3, and is moved in the Y-direction by the drive of this drive system and held in position. The configuration of the drive system of the tool post driver 21A may be the same as or different from that of the Y-direction drive system M3. The Z-direction drive system M1, the X-direction direction drive system M2, and the Y-direction drive system M3 are controlled by a controller CONT.

The tool post drivers 21, 21A contain rotation drivers, such as motors. The tool post driver 21 has a first turret 23 mounted thereon. The first turret 23 can be rotated around a Z-direction axis by the drive of the rotation driver. Similarly, the tool post driver 21A has a second turret 23A mounted thereon. The second turret 23A can be rotated around a Z-direction axis by the drive of the rotation driver. The first turret 23 is located over the workpiece W (on the positive X-side thereof); the second turret 23A is located under the workpiece W (on the negative X-side thereof). That is, the workpiece W is sandwiched between the first and second turrets 23, 23A.

The first and second turrets 23, 23A have, on the circumferential surfaces thereof, multiple holders for holding cutting tools T. The cutting tools T, T1, T2 are held by all or some of the holders. Accordingly, desired cutting tools can be selected from the cutting tools T, T1, T2 by rotating the first turret 23 or second turret 23A. The cutting tools T, T1, T2 held by the holders of the first and second turrets 23, 23A can be replaced on a holder basis. Examples of the cutting tools T, T1, T2 include cutting tools for cutting the workpiece W, as well as rotary tools, such as drills and end mills.

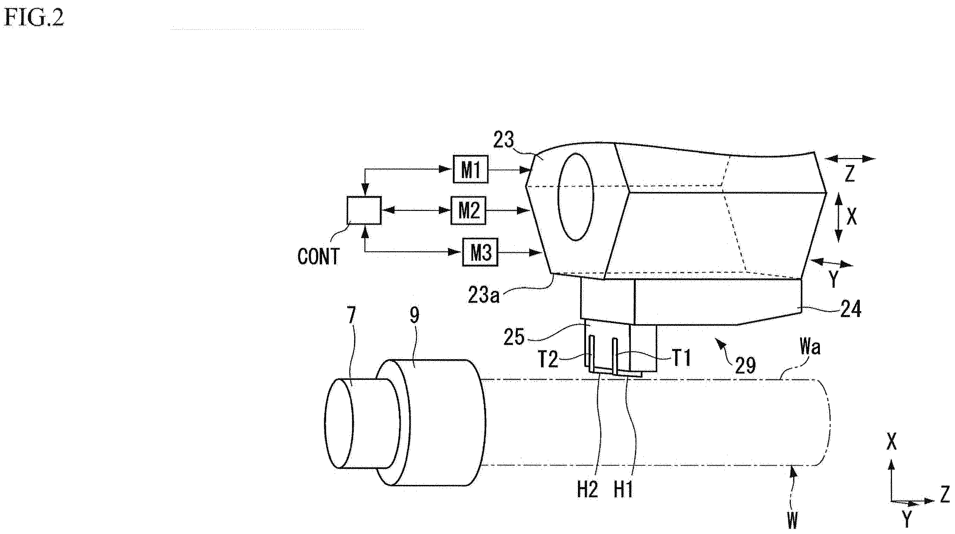

The first turret 23 has a tool head 24 formed thereon as one of the holders, and the second turret 23A has a tool head 24A formed thereon as one of the holders. The configurations of the tool heads 24, 24A may be the same or different. The second turret 23A need not necessarily be provided with the tool head 24A. The tool head 24 has the first cutting tool T1 and the second cutting tool T2 mounted thereover with a holder 25 (see FIG. 2) therebetween. On the other hand, the tool head 24A has the cutting tool T mounted thereover with a holder (not shown) therebetween. The cutting tool T may be the same as or different from any cutting tool mounted over the tool head 24.

While, in the machine tool 100 shown in FIG. 1, the cutting tools T, T1 (T2) are located on the positive and negative X-sides of the workpiece W so as to sandwich the workpiece W, these cutting tools may be located on either side. Also, while the cutting tools T, T1 (T2) are located in the X-direction (the vertical direction) with respect to the workpiece W, these cutting tools may be located in the Y-direction with respect to the workpiece W instead. In cutting the workpiece W, the controller CONT may use the cutting tools T, T1(T2) in any manner. For example, it may use one of the cutting tools, or may use both alternately, or may use both simultaneously. While, in FIG. 1, the first and second turrets 23, 23A are used as tool posts, other types of tool posts may be used. For example, a comb-shaped tool post may be used. If a comb-shaped tool post is used, the first cutting tool T1 (second cutting tool T2) is held by the teeth of the comb-shaped tool post with holders 25 therebetween. By moving the comb-shaped tool post in the direction in which the teeth are arranged, one of the holders 25 is selected.

FIG. 2 is an enlarged perspective view of a major part including the main spindle 7 and the first turret 23, which is a part corresponding to the workpiece W. As shown in FIG. 2, the tool head 24 is detachably mounted on the negative X-side surface 23a of the first turret 23. A holder 25 is mounted on the negative X-side of the tool head 24. The holder 25 holds multiple cutting tools. In the present embodiment, the holder 25 holds the two cutting tools: the first cutting tool T1 and the second cutting tool T2. The first cutting tool T1 and the second cutting tool T2 are arranged in the Y-direction. The first cutting tool T1 has a linear cutting blade H1 on the negative X-side thereof. The second cutting tool T2 has a linear cutting blade H2 on the negative X-side thereof.

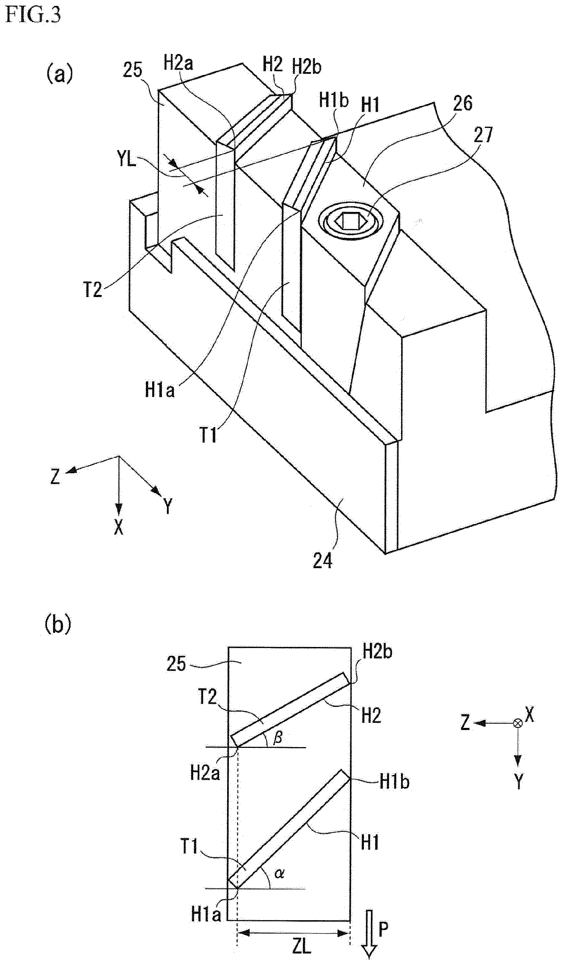

FIG. 3(b) includes drawings showing an example of the tool head 24 and the holder 25 seen from the negative X-side. As shown in FIG. 3(a), the first cutting tool T1 is pressed against and fixed to the holder 25 by, for example, a wedge-shaped insertion member 26. The insertion member 26 is fastened to the holder 25 by, for example, a bolt 27. The first cutting tool T1 can be replaced by loosening the bolt 27 to reduce the pressing force of the insertion member 26. Although not shown, the second cutting tool T2 is also fixed to the holder 25 by a similar configuration. The second cutting tool T2 may be held by the insertion member 26. In this case, both the first cutting tool T1 and the second cutting tool T2 may be pressed and fixed by disposing a spacer between the first cutting tool T1 and the second cutting tool T2 and fastening the bolt 27. The first cutting tool T1 and the second cutting tool T2 are held in such a manner that the linear cutting blade H1 and the linear cutting blade H2 are along the YZ-plane.

FIG. 3(b) shows an example of the positional relationship between the first cutting tool T1 and the second cutting tool T2 when the holder 25 is seen from the negative X-side. As shown in FIG. 3(b), the linear cutting blade H1 and the linear cutting blade H2 are disposed so as not to be parallel with each other. The linear cutting blade H1 is disposed so as to be inclined with respect to the Z-direction by an angle α. The linear cutting blade H2 is disposed so as to be inclined with respect to the Z-direction by an angle β. The angle α and the angle β are different angles, and the angle β is set to a smaller angle than the angle α.

A large angle with respect to the Z-direction like the angle α results in a reduction in the speed at which the linear cutting blade H1 approaches the workpiece W, allowing the workpiece W to be cut by a large amount; however, the roughness of the cutting surface is increased. A large angle with respect to the Z-direction like the angle β results in an increase in the speed at which the linear cutting blade H2 approaches the workpiece W, disabling the workpiece W from being cut by a large amount; however, the roughness of the cutting surface is reduced. Accordingly, the workpiece W can be cut by a large amount by inclining the linear cutting blade H1 by the angle α as described in the present embodiment. Also, the roughness of the cutting surface can be reduced by inclining the linear cutting blade H2 by the angle α as described in the present embodiment.

In the present embodiment, the first cutting tool T1 and the second cutting tool T2 move in a moving direction P parallel with the Y-direction. Accordingly, the Z-direction component of the length of the linear cutting blade H1 from the positive Y-side end H1a to the negative Y-side edge H1b and the Z-direction component of the length of the linear cutting blade H2 from the positive Y-side edge H2a to the negative Y-side edge H2b are both equal to a length ZL. The first cutting tool T1 and the second cutting tool T2 are spaced from each other in the Y-direction by a distance YL so that the edge H2a of the linear cutting blade H2 is located on the negative Y-side compared to the end H1a of the linear cutting blade H1.

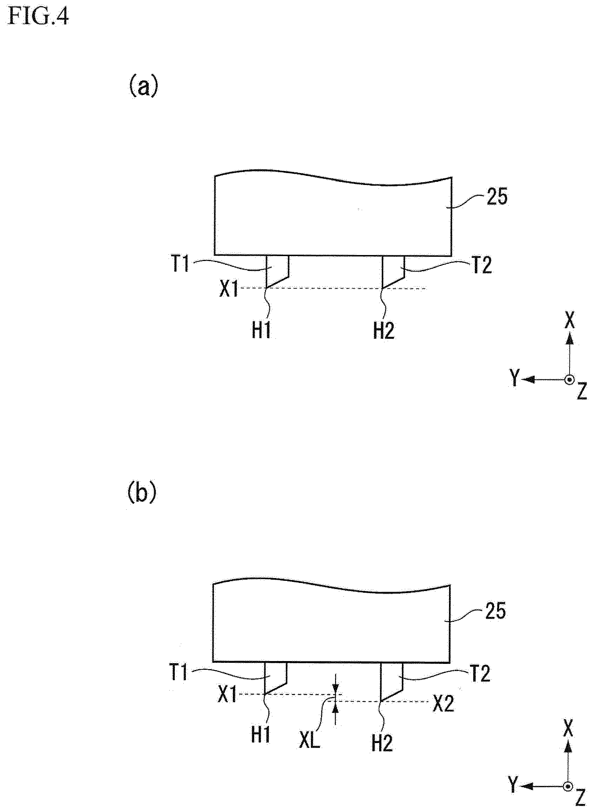

FIGS. 4 (a) and 4(b) are drawings showing the positional relationship between the first cutting tool T1 and the second cutting tool T2 when the holder 25 is seen in the Z-direction. As shown in FIG. 4(a), the holder 25 is able to hold the first cutting tool T1 and the second cutting tool T2 in such a manner that the positions of the linear cutting blade H1 and linear cutting blade H2 are the same in the X-direction. In this case, the X-direction positions of the cutting edges of the first cutting tool T1 and the second cutting tool T2 with respect to the workpiece W become the same. This is suitable for, for example, a case in which main machining (rough machining, rough cutting) is performed on the workpiece W using the first cutting tool T1 and then the remaining portion, which has not been subjected to the main machining, is finished using the second cutting tool T2.

Also, as shown in FIG. 4(b), the holder 25 is able to hold the first cutting tool T1 and the second cutting tool T2 in such a manner that the linear cutting blade H2 of the second cutting tool T2 protrudes in the positive X-direction by a protrusion amount XL compared to the linear cutting blade H1 of the first cutting tool T1. The protrusion amount XL is not limited to a particular amount and can be changed to an appropriate amount in accordance with the amount of the workpiece W to be cut. In this case, the workpiece W, which has been cut using the first cutting tool T1 by a certain amount, is further cut using the second cutting tool T2 by an amount corresponding to the protrusion amount XL. This is suitable for, for example, a case in which the workpiece W is cut using the first cutting tool T1 and the second cutting tool T2 in multiple steps.

Since the holder 25 holds the linear cutting blade H1 and the linear cutting blade H2 whose X-direction positions are individually adjusted, the amounts of the workpiece W cut using the first cutting tool T1 and the second cutting tool T2 can be individually adjusted. Thus, it is possible to dispose the linear cutting blade H1 and the linear cutting blade H2 in appropriate positions in accordance with the cutting aspect of the workpiece W and then to cut the workpiece W. The amounts of the workpiece W cut using the first cutting tool T1 and the second cutting tool T2 may be the same, or the amount of the workpiece W cut using the second cutting tool T2 may be smaller than the amount of the workpiece W cut using the first cutting tool T1.

The first cutting tool T1 and the second cutting tool T2 are positioned in the X-direction by driving the X-direction drive system M2. Thus, the amount of the workpiece W to be cut is determined. Also, by driving the Z-direction drive system M1, the X-direction drive system M2, and the Y-direction drive system M3, the first cutting tool T1 and the second cutting tool T2 can be moved relative to the workpiece W in one of the Z-direction, the X-direction, and the Y-direction or in a direction obtained by combining two or more of these directions, along with the first turret 23 and the tool head 24.

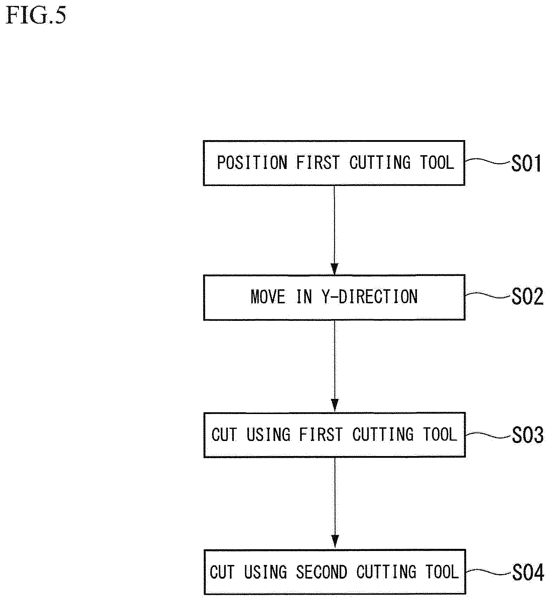

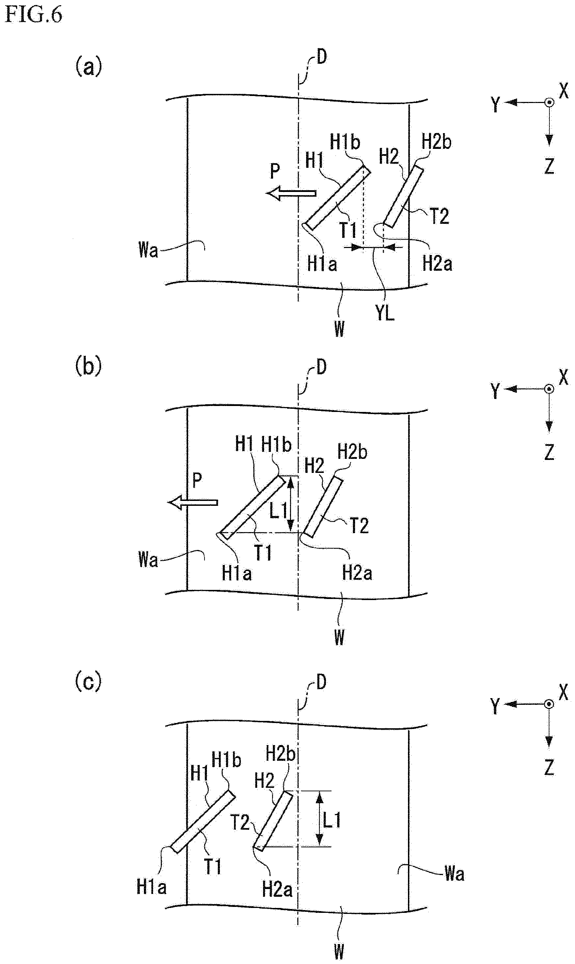

Next, the operation of the machine tool 100 thus configured will be described. FIG. 5 is a flowchart showing an example of the operation of the first cutting tool T1 and the second cutting tool T2. FIG. 6 includes drawings showing an example of the operation of the first cutting tool T1 and the second cutting tool T2 when the workpiece W is seen from the X-direction. The following description will be made with reference to the flowchart of FIG. 5 and, when necessary, FIG. 6. First, the machine tool 100 causes the main spindle 7 to hold the workpiece W to be machined. After grasping the workpiece W, the machine tool 100 drives the motor 12 to rotate the main spindle 7, thereby rotating the workpiece W. Note that when holding the workpiece W using the main spindle 7 and the counter spindle 8, the machine tool 100 rotates the main spindle 7 and the counter spindle 8 while synchronizing them. The number of revolutions of the workpiece W is set in accordance with the type of machining as appropriate.

Subsequently, the first turret 23 is rotated, and the holder 25 holding the first cutting tool T1 and the second cutting tool T2 is selected. Prior to selecting the first cutting tool T1 and the second cutting tool T2, the first cutting tool T1 and the second cutting tool T2 are mounted on the holder 25, and the holder 25 is mounted on the tool head 24 of the first turret 23. Thus, the linear cutting blades H1 and H2 are disposed in a direction parallel with the YZ-plane.

Then, the positions of the first cutting tool T1 and the second cutting tool T2 in the X-direction are adjusted. In this adjustment, the tool post driver 21 is moved in the X-direction by the X-direction drive system M2 so that the linear cutting blade H1 and the linear cutting blade H2 correspond to the cylindrical surface Wa of the workpiece W. The positions of the linear cutting blade H1 and the linear cutting blade H2 in the X-direction determine the amount of the cylindrical surface Wa of the workpiece W to be cut. The amount of the cylindrical surface Wa to be cut may be set to a predetermined value by the controller CONT, or may be set by the operator manually.

Then, when the rotation of the workpiece W is stabilized, the first cutting tool T1 is positioned (step S01). The YZ coordinate position to which the linear cutting blade H1 of the first cutting tool T1 is moved in the cutting process is set, for example, by moving the Z-axis slide 17 in the Z-direction and moving the tool head 24 in the Y-direction. These movements are made by the drive of the Z-direction drive system M1 and Y-direction drive system M3 under the control of the controller CONT.

Then, the linear cutting blade H1 of the first cutting tool T1 is moved in the Y-direction, which is a tangential direction of the cylindrical surface Wa of the workpiece W (step S02). For example, the movement of the first cutting tool T1 in the Y-direction is made on the basis of machining information (machining recipe) preset in the storage or the like of the controller CONT. Note that the first cutting tool T1 may be moved by the operator manually. When the linear cutting blade H1 of the first cutting tool T1 moves from the negative Y-side to the positive Y-side with respect to the Z-direction generating line (axis) D on the cylindrical surface Wa of the workpiece W, the positive Y-side end H1a of the linear cutting blade H1 contacts the workpiece W first.

Then, as shown in FIG. 6(a), the workpiece W is cut using the first cutting tool T1 by moving the linear cutting blade H1 and the linear cutting blade H2 in the positive Y-direction (the moving direction P) (step S03). The direction of this movement serves as a track along a tangent plane to the cylindrical surface Wa of the workpiece W. First, positive Y-side end H1a of the linear cutting blade H1 contacts the cylindrical surface Wa, which is then cut by the end H1a. As the linear cutting blade H1 moves along the cylindrical surface Wa in the positive Y-direction, the cut portion of the workpiece W is gradually shifted from the end H1a to the end H1b in the negative Z-direction. As seen above, as the linear cutting blade H1 moves in the positive Y-direction, the cut portion of the cylindrical surface Wa of the workpiece W moves in the Z-direction.

As shown in FIG. 6 (b), when the end H1b of the linear cutting blade H1 leaves the generating line D, the cutting of the cylindrical surface Wa using the first cutting tool T1 is complete. While, in this cutting process, a region L1 (see FIG. 6(b)) with respect to the Z-direction, of the cylindrical surface Wa is cut by using the entire linear cutting blade H1 from the end H1a to the end H1b, the cylindrical surface Wa may be cut using a part of the linear cutting blade H1.

After the linear cutting blade H1 and the linear cutting blade H2 leave the generating line D, the linear cutting blade H1 and the linear cutting blade H2 are moved in the positive Y-direction as they are. Thus, the workpiece W is cut using the second cutting tool T2 (step S04). The end H1b of the linear cutting blade H1 of the first cutting tool T1 and the end H2a of the linear cutting blade H2 of the second cutting tool T2 are spaced from each other in the Y-direction by the distance YL. Accordingly, after the end H1b of the linear cutting blade H1 leaves the generating line D, both the linear cutting blade H1 and the linear cutting blade H2 are away from the workpiece W. Thus, even if deformation such as flexure occurs in the workpiece W during the cutting of the workpiece W using the linear cutting blade H1, the flexure is eliminated.

The cutting of the workpiece W using the second cutting tool T2 starts when the positive Y-side end H2a of the linear cutting blade H2 contacts the cylindrical surface Wa; the linear cutting blade H2 moves along the cylindrical surface Wa in the positive Y-direction; and the cutting ends when the end H2b leaves the generating line D. In this case, the Z-component of the length of the linear cutting blade H2 and the moving direction thereof are the same as the Z-component of the length of the linear cutting blade H1 and the moving direction thereof, respectively. For this reason, as shown in FIG. 6(c), the entire linear cutting blade H2 from the end H2a to the end H2b is used during the cutting of the workpiece W using the second cutting tool T2. Thus, the same region L1 as the region of the cylindrical surface Wa cut using the linear cutting blade H1 is cut. When the cutting using the second cutting tool T2 is complete, the cutting process is complete. Note that when cutting the workpiece W using the second cutting tool T2, the second cutting tool T2 may be temporarily prevented from being moved in the positive Y-direction and then may be moved in the positive Y-direction after a predetermined time. Thus, the workpiece W, which has been released from the cutting using the linear cutting blade H1, is cut using the second cutting tool T2 only after being stabilized. As a result, the workpiece W can be machined with high accuracy.

In the above cutting process, the angle β of the linear cutting blade H2 is smaller than the angle α of the linear cutting blade H1. For this reason, the region L1 having the same length in the Z-direction is machined in a shorter time and with higher surface accuracy (lower surface roughness) using the second cutting tool T2 than using the first cutting tool T1. Thus, even if the amount of the workpiece W to be cut using the first cutting tool T1 is set to a large amount and thus the roughness of the cutting surface is increased, the final roughness of the cutting surface can be reduced by cutting (finishing) the workpiece W using the second cutting tool T2. As a result, the workpiece W can be efficiently cut with high accuracy in a short time.

If the cutting-edge angle is small as seen in the second cutting tool T2, for example, if a small-diameter workpiece or a low-rigidity workpiece is machined or if a portion distant from the grasping claws 9a, of the workpiece W (a portion having low grasping rigidity) is machined, a higher load (a greater cutting force) is applied to the workpiece W and thus chattering vibration, distortion, or the like is more likely to occur in the workpiece W. On the other hand, the first cutting tool T1 has the larger cutting-edge angle α than the second cutting tool T2. For this reason, a lower load is applied to the workpiece W, and chattering vibration, warp, or the like is less likely to occur in the workpiece W. Accordingly, even if a small-diameter workpiece W or a low-rigidity workpiece W is machined, the workpiece W can be cut with high accuracy by roughly machining the workpiece W using the first cutting tool T1 and finishing it using the second cutting tool T2.

As described above, the workpiece W has already been released when cut using the linear cutting blade H2. Thus, even if the amount of the workpiece W to be cut using the first cutting tool T1 is set to a large amount and an error (the remaining portion with respect to the design value) occurs due to the warp or the like of the workpiece W, the workpiece W is finished by cutting it using the linear cutting blade H2 immediately. Thus, the entire cutting process including a finish is completed by moving the holder 25 once. No matter whether the positions of the linear cutting blade H1 and the linear cutting blade H2 are the same in the positive X-direction or the linear cutting blade H2 protrudes by the protrusion amount XL, as shown in FIG. 4, the entire cutting process including a finish is completed by moving the holder 25 once. If the linear cutting blade H2 protrudes by the protrusion amount XL (as shown in FIG. 4(b)), the first cutting tool T1 and the second cutting tool T2 share the desired amount of the workpiece W to be cut. Thus, the load on the first cutting tool T1 is reduced, and a reduction in the use life of the first cutting tool T1 can be suppressed.

While there has been described the case in which the workpiece W is cut by moving the linear cutting blade H1 and the linear cutting blade H2 in the Y-direction (the moving direction P), the workpiece W may be cut in other manners. The workpiece W may be cut by moving the linear cutting blade H1 and the linear cutting blade H2 in directions (moving directions) P1, P2 obtained by combining the positive Y-direction and the negative Z-direction.

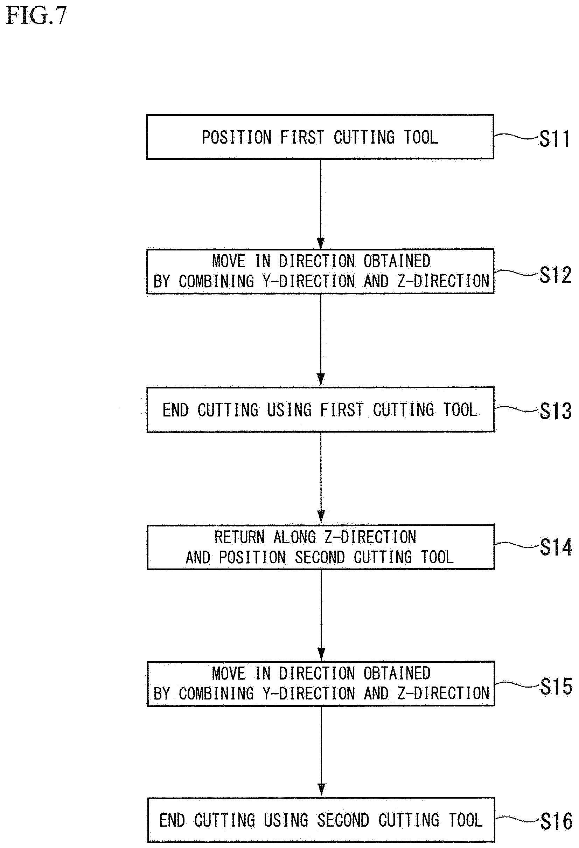

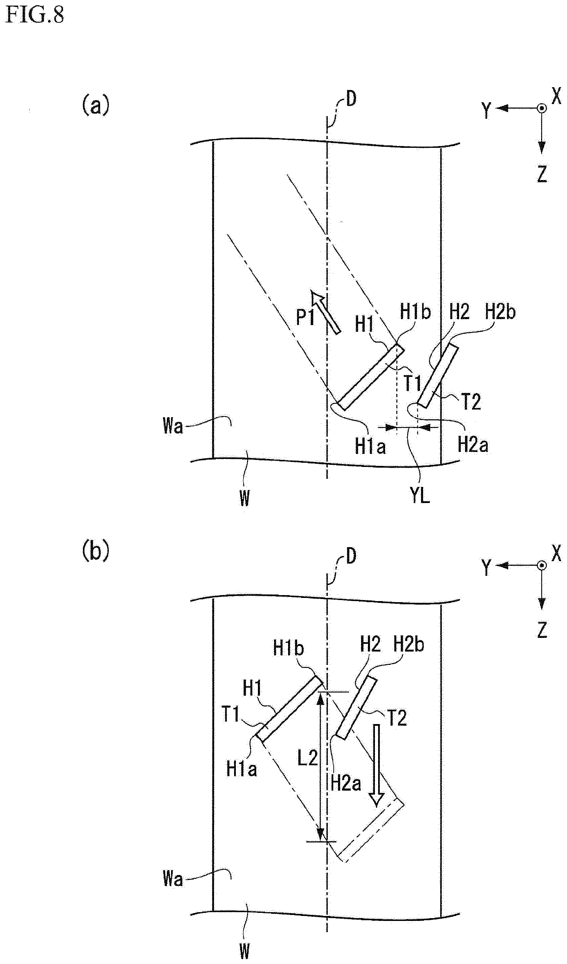

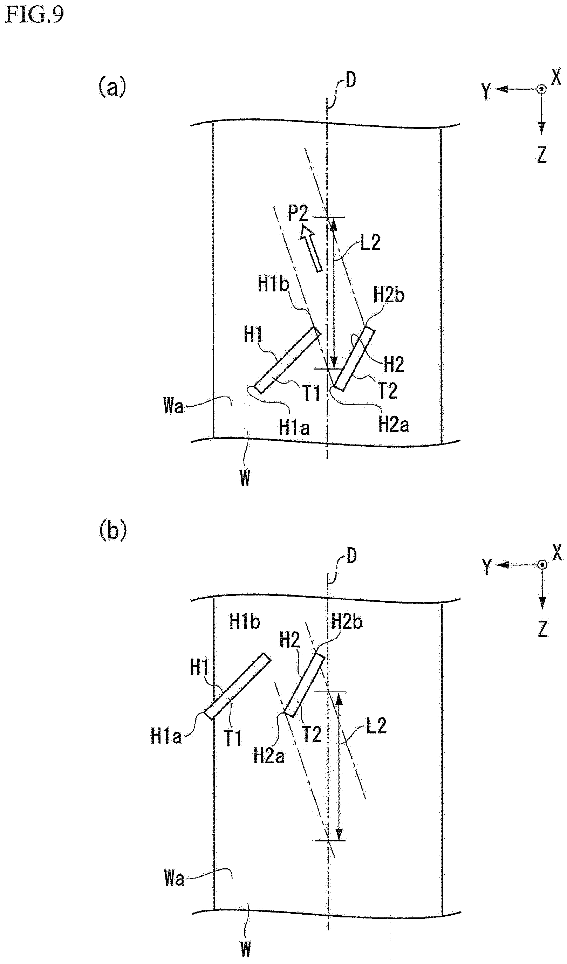

FIG. 7 is a flowchart showing a process of cutting the workpiece W by moving the linear cutting blade H1 and the linear cutting blade H2 in the different moving directions, P1 and P2. FIG. 8 includes drawings showing another example of the operation of the first cutting tool T1 and the second cutting tool T2 when the workpiece W is seen from the X-direction. FIG. 9 includes drawings showing another example of the operation of the cutting tools following FIG. 8. The following description will be made with reference to the flowchart of FIG. 7 and, when necessary, FIGS. 8 and 9. First, as shown in FIG. 7, the first cutting tool T1 is positioned (step S11). Then, as shown in FIG. 8(a), the workpiece W is cut using the first cutting tool T1 by moving the linear cutting blade H1 and the linear cutting blade H2 in the moving direction P1 (a direction obtained by combining the positive Y-direction and the negative Z-direction) (step S12). The moving direction P1 serves as a track along a tangent plane to the cylindrical surface Wa of the workpiece W.

The cutting of the workpiece W using the first cutting tool T1 starts when the positive Y-side end H1a of the linear cutting blade H1 contacts the cylindrical surface Wa; the linear cutting blade H1 moves along the cylindrical surface Wa in the moving direction P1; and the cutting ends when the end H1b leaves the generating line D (step S13). In this cutting process, as shown in FIG. 8(b), a region L2 with respect to the Z-direction of the cylindrical surface Wa is cut. The length of the region L2 in the Z-direction is a length obtained by adding up the Z-direction length when the linear cutting blade H1 is projected on the generating line D and the Z-direction component of the moving distance of the linear cutting blade H1.

After the end H1b of the linear cutting blade H1 leaves the generating line D, the movement of the linear cutting blade H1 and the linear cutting blade H2 in the moving direction P1 is stopped before the end H2a of the linear cutting blade H2 reaches the generating line D. Then, the linear cutting blade H2 is positioned by moving the linear cutting blade H1 and the linear cutting blade H2 in the positive Z-direction (step S14). In this portioning, the linear cutting blade H2 is located in a position close to the position in which the linear cutting blade H1 has been located during the cutting.

After positioning the linear cutting blade H2, the workpiece W is cut using the second cutting tool T2 by moving the linear cutting blade H1 and the linear cutting blade H2 in the moving direction P2, which differs from the moving direction P1, as shown in FIG. 9 (a) (step S15). The moving direction P2 is set such that the same region L2 as the region of the cylindrical surface Wa cut using the linear cutting blade H1 is cut. The cutting of the workpiece W using the second cutting tool T2 starts when the positive Y-side end H2a of the linear cutting blade H2 contacts the cylindrical surface Wa; the linear cutting blade H2 moves along the cylindrical surface Wa in the moving direction P2; and the cutting ends when the end H2b leaves the generating line D, as shown in FIG. 9(b) (step S16). When the cutting using the second cutting tool T2 is complete, the cutting process is complete.

Also in the operation of the first cutting tool T1 and the second cutting tool T2 shown in FIGS. 8 and 9, as in the operation of the first cutting tool T1 and the second cutting tool T2 shown in FIG. 6, the angle β of the linear cutting blade H2 is smaller than the angle α of the linear cutting blade H1. Thus, by performing main machining (rough machining) using the first cutting tool T1 and performing finish machining using the second cutting tool T2 as described above, the workpiece W can be efficiently cut with high accuracy in a short time.

Also, the workpiece W has already been released when cut using the linear cutting blade H2. Thus, even if an error occurs by setting a larger amount of the workpiece W to be cut for the first cutting tool T1, the workpiece W is finished by cutting it using the linear cutting blade H2. Also, the moving distance of the holder 25 is shorter than that when returning the first cutting tool T1 to the original position and then performing the second cutting. Thus, the machining time can be reduced. This operation can be performed no matter whether the positions of the linear cutting blade H1 and the linear cutting blade H2 are the same in the positive X-direction or the linear cutting blade H2 protrudes by the protrusion amount XL, as shown in FIG. 4. Also, as in the operation of the first cutting tool T1 and the second cutting tool T2 shown in FIG. 6, if the linear cutting blade H2 protrudes by the protrusion amount XL (as shown in FIG. 4(b)), the first cutting tool T1 and the second cutting tool T2 share the desired amount of the workpiece W to be cut.

As described above, according to the present embodiment, the first cutting tool T1 and the second cutting tool T2 are held by the holder 25. Thus, when multiple cutting steps are performed on the workpiece W, for example, when main machining (rough machining) and finish machining are performed thereon, the moving distance of the cutting tools is reduced. As a result, it is possible to reduce the machining time while maintaining the machining accuracy. Also, the angles of the linear cutting blades H1, H2 can be set to angles suitable for the respective types of machining. Thus, it is possible to machine the workpiece W with high accuracy such that the roughness of the cutting surface is reduced and in a short time. Also, if the moving directions of the linear cutting blades H1, H2 are the moving directions P1, P2, respectively, obtained by combining the Z-direction and the Y-direction, the first cutting tool T1 and the second cutting tool T2 are sent in the moving directions P1, P2, respectively. Thus, it is possible to machine the workpiece W with high accuracy while cutting the range which is wide in the Z-direction, as well as to reduce the machining time.

### <Second Embodiment>

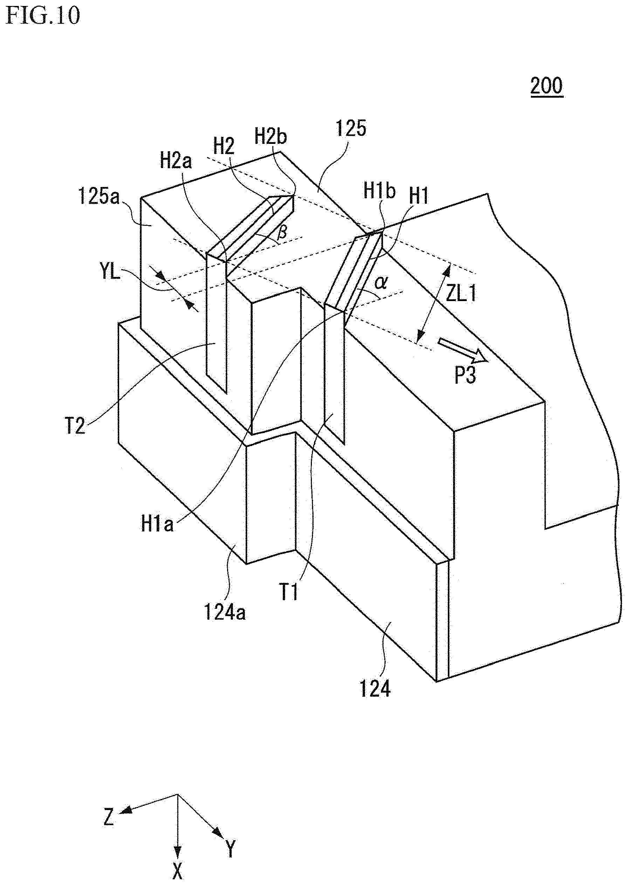

A machine tool 200 of a second embodiment will be described. FIG. 10 shows an example of a tool head 124 of the machine tool 200 of the second embodiment seen in the positive X-direction. Elements not shown in FIG. 10 are similar to those of the machine tool 100 described in the first embodiment. Also, elements identical or similar to those in the first embodiment in FIG. 10 are given the same reference signs, and the description thereof will be omitted or simplified. Note that in FIG. 10, an insertion member 26 or bolt 27 as shown in FIG. 3 is not shown. In the second embodiment, the position of a second cutting tool T2 with respect to a first cutting tool T1 differs from that in the first embodiment.

In the first embodiment, the configuration in which the first cutting tool T1 and the second cutting tool T2 are disposed in positions aligned with each other in the Y-direction has been described as an example. In the second embodiment, on the other hand, the second cutting tool T2 is disposed in a position which is located on the negative Y-side of the first cutting tool T1 and which is shifted to the positive Z-side with respect to the first cutting tool T1, as shown in FIG. 10. The amount of shift to the positive Z-direction is set in accordance with a moving direction P3 (to be discussed later). Specifically, the amount of shift of the second cutting tool T2 to the positive Z-side is set so that when the first cutting tool T1 and the second cutting tool T2 move in the moving direction P3, the range of the workpiece W cut using the second cutting tool T2 becomes the same as the range of the workpiece W cut using the first cutting tool T1.

Also in the second embodiment, a linear cutting blade H1 and a linear cutting blade H2 are disposed so as not to be parallel with each other. The linear cutting blade H1 is disposed so as to be inclined with respect to the Z-direction by an angle α. The linear cutting blade H2 is disposed so as to be inclined with respect to the Z-direction by an angle β. In the second embodiment, the first cutting tool T1 and the second cutting tool T2 move in the moving direction P3. Accordingly, the component of a direction perpendicular to the moving direction P3, of the length of the linear cutting blade H1 from the positive Y-side edge H1a to the negative Y-side edge H1b and the component of a direction perpendicular to the moving direction P3, of the length of the linear cutting blade H2 from the positive Y-side edge H2a to the negative Y-side edge H2b are equal to ZL1. Also, the first cutting tool T1 and the second cutting tool T2 are spaced from each other in the Y-direction by a distance YL so that the edge H2a of the linear cutting blade H2 is located on the negative Y-side compared to the edge H1a of the linear cutting blade H1.

To hold the second cutting tool T2, which is shifted to the positive Z-side, a holder 125 includes a protrusion 125a protruding to the positive Z-side. To support the protrusion 125a of the holder 125, the tool head 124 includes a protrusion 124a protruding to the positive Z-side. Note that the holder 125 need not be provided with the protrusion 125a and may be rectangular, as long as it is able to hold the second cutting tool T2.

Next, the operation of the machine tool 200 including the tool head 124 and the holder 125 thus configured will be described. First, in accordance with steps similar to those in the first embodiment, the machine tool 200 causes a main spindle 7 to hold a workpiece W and then rotates the main spindle 7. A first turret 23 is rotated, and the first cutting tool T1 and the second cutting tool T2 are selected. Then, when the rotation of the workpiece W is stabilized, the first cutting tool T1 is positioned.

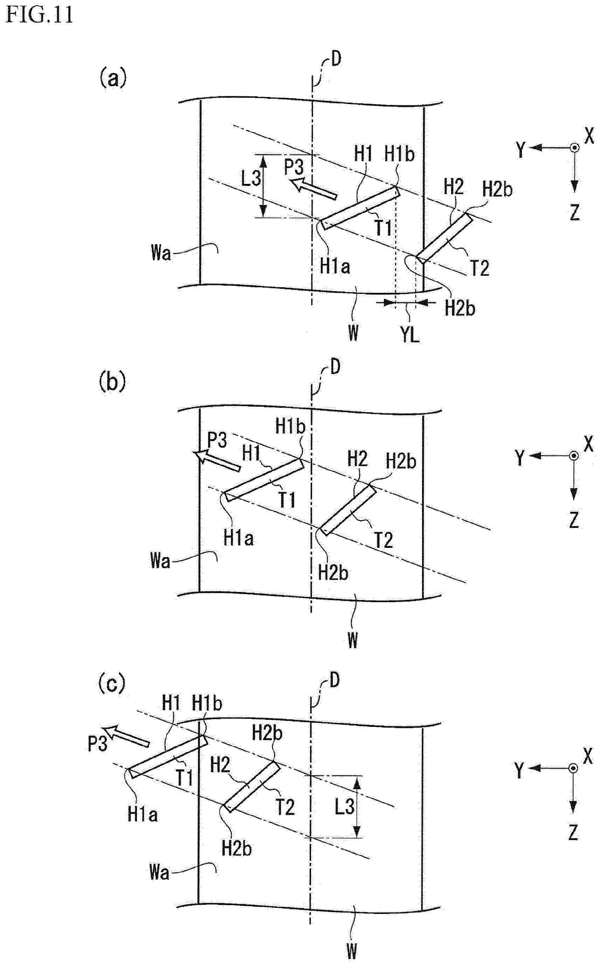

Then, as shown in FIG. 11(a), the workpiece W is cut using the first cutting tool T1 by moving the linear cutting blade H1 and the linear cutting blade H2 in the moving direction P3, which is a direction obtained by combining the positive Y-direction and the negative Z-direction. The cutting of the workpiece W using the first cutting tool T1 starts when the positive Z-side end H1a of the linear cutting blade H1 contacts a cylindrical surface Wa; the linear cutting blade H1 moves in the moving direction P3 with respect to a generating line D along a tangent plane to the cylindrical surface Wa of the workpiece W; and the cutting ends when the end H1b of the linear cutting blade H1 leaves the generating line D. In this cutting process, as shown in FIG. 11(b), a region L3 with respect to the Z-direction, of the cylindrical surface Wa is cut.

After the end H1b of the linear cutting blade H1 leave the generating line D, the linear cutting blade H1 and the linear cutting blade H2 are moved in the moving direction P3 as they are. Thus, the workpiece W is cut using the second cutting tool T2. The cutting of the workpiece W using the second cutting tool T2 starts when the positive Y-side end H2a of the linear cutting blade H2 contacts the cylindrical surface Wa; the linear cutting blade H2 moves in the moving direction P3 along the cylindrical surface Wa; and the cutting ends when the end H2b leaves the generating line D. In the cutting using the second cutting tool T2, the same region L3 as the region of the cylindrical surface Wa cut using the linear cutting blade H1 is cut, as shown in FIG. 11(c). When the cutting using the second cutting tool T2 is complete, the cutting process is complete. Note that when cutting the workpiece W using the second cutting tool T2, the second cutting tool T2 may be temporarily prevented from being moved in the moving direction P3 and may be moved in the moving direction P3 after a predetermined time. Thus, the workpiece W, which has been released from the cutting using the linear cutting blade H1, is cut using the second cutting tool T2 only after being stabilized. As a result, the workpiece W can be machined with high accuracy.

Also in the present embodiment, the angle β of the linear cutting blade H2 is smaller than the angle α of the linear cutting blade H1. Thus, by performing main machining (rough machining) using the first cutting tool T1 and performing finish machining using the second cutting tool T2 as in the first embodiment, the workpiece W can be efficiently cut with high accuracy in a short time. Also, the workpiece W has already been released when cut using the linear cutting blade H2. Thus, as in the first embodiment, even if the amount of the workpiece W to be cut using the first cutting tool T1 is set to a large amount and an error occurs due to the warp or the like of the workpiece W, the workpiece W is finished by cutting it using the linear cutting blade H2 immediately. As a result, the entire cutting process including a finish is completed by moving the holder 125 once. As in the first embodiment, no matter whether the positions of the linear cutting blade H1 and the linear cutting blade H2 are the same in the positive X-direction or the linear cutting blade H2 protrudes by the protrusion amount XL, as shown in FIG. 4, the entire cutting process including a finish is completed by moving the holder 25 once. As in the first embodiment, if the linear cutting blade H2 protrudes by the protrusion amount XL (as shown in FIG. 4(b)), the first cutting tool T1 and the second cutting tool T2 share the desired amount of the workpiece W to be cut.

As described above, according to the present embodiment, the first cutting tool T1 and the second cutting tool T2 are held by the holder 125, as in the first embodiment. Thus, when multiple cutting steps are performed on the workpiece W, for example, when main machining (rough machining) and finish machining are performed thereon, the moving distance of the cutting tools is reduced. As a result, it is possible to reduce the machining time while maintaining the machining accuracy. Also, the angles of the linear cutting blades H1, H2 can be set to angles suitable for the respective types of machining. Thus, it is possible to machine the workpiece W with high accuracy such that the roughness of the cutting surface is reduced and in a short time.

### <Third Embodiment>

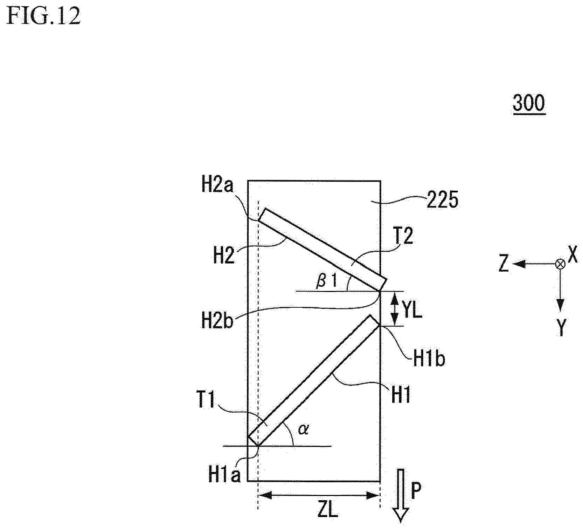

A machine tool 300 of a third embodiment will be described. FIG. 12 shows an example of a holder 225 of the machine tool 300 of the third embodiment seen in the positive X-direction. Elements not shown in FIG. 12 are similar to those of the machine tool 100 described in the first embodiment. Also, elements identical or similar to those in the first embodiment in FIG. 12 are given the same reference signs, and the description thereof will be omitted or simplified. In the third embodiment, the position of a second cutting tool T2 with respect to a first cutting tool T1 differs from that in the first embodiment.

In the first embodiment, the configuration in which the first cutting tool T1 and the second cutting tool T2 are inclined in the same direction with respect to the Z-direction has been described as an example. In the third embodiment, on the other hand, the second cutting tool T2 is disposed so as to be inclined in a direction opposite to the direction of the first cutting tool T1 by an angle β1 with respect to the Z-direction, as shown in FIG. 12. Accordingly, a linear cutting blade H1 and a linear cutting blade H2 are disposed so as not to be parallel with each other. Note that an angle α and the angle β1 may be the same. In the second cutting tool T2, the positive Z-side end H2a of the linear cutting blade H2 is disposed on the negative Y-side compared to the negative Z-side end H2b. As in the first embodiment, the linear cutting blade H1 is inclined with respect to the Z-direction by the angle α. The positive Z-side end H1a of the linear cutting blade H1 is disposed on the positive Y-side compared to the negative Z-side end H1b.

The linear cutting blade H1 and the linear cutting blade H2 have the same lengths perpendicular to the moving direction P. In the third embodiment, the first cutting tool T1 and the second cutting tool T2 move in the positive Y-direction (a moving direction P). Accordingly, the Z-component of the length of the linear cutting blade H1 from the positive Y-side edge H1a to the negative Y-side edge H1b and the Z-component of the length of the linear cutting blade H2 from the positive Y-side edge H2a to the negative Y-side edge H2b are equal to a length ZL. Also, the first cutting tool T1 and the second cutting tool T2 are spaced from each other in the Y-direction by a distance YL so that the edge H2b of the linear cutting blade H2 is located on the negative Y-side compared to the edge H1b of the linear cutting blade H1.

Next, the operation of the machine tool 300 including the holder 225 thus configured will be described. First, in accordance with steps similar to those in the first embodiment, the machine tool 300 causes a main spindle 7 to hold a workpiece W and then rotates the main spindle. A first turret 23 is rotated, and the first cutting tool T1 and the second cutting tool T2 are selected. Then, when the rotation of the workpiece W is stabilized, the first cutting tool T1 is positioned.

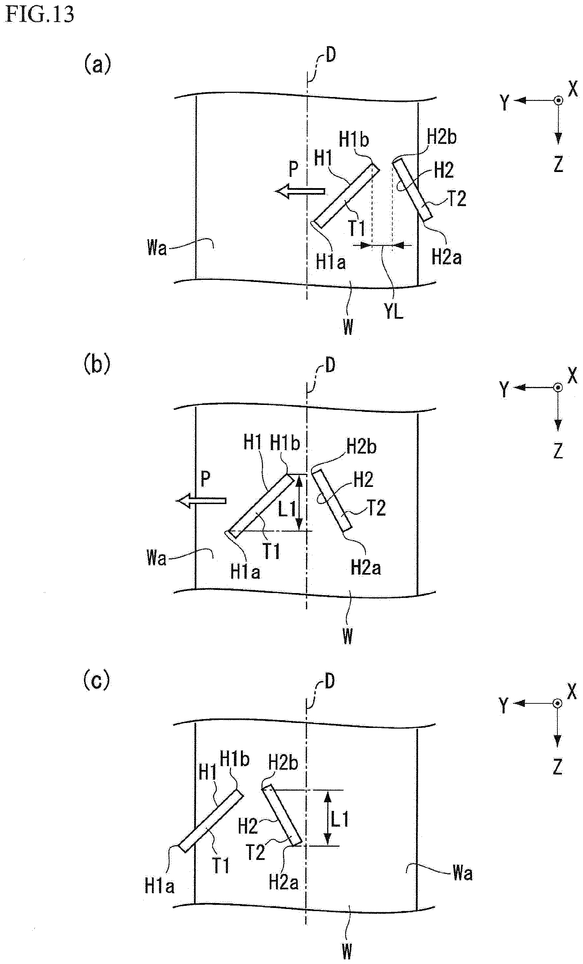

Then, as shown in FIG. 13(a), the workpiece W is cut using the first cutting tool T1 by moving the linear cutting blade H1 and the linear cutting blade H2 in the moving direction P parallel with the positive Y-direction. Note that the movement of the first cutting tool T1 in the moving direction P is similar to that shown in FIG. 6 and therefore will not be described. As shown in FIG. 13(b), after the end H1b of the linear cutting blade H1 leaves a generating line D, the linear cutting blade H1 and the linear cutting blade H2 are moved in the moving direction P as they are. Thus, the workpiece W is cut using the second cutting tool T2.

The cutting of the workpiece W using the second cutting tool T2 starts when the positive Y-side end H2b of the linear cutting blade H2 contacts the cylindrical surface Wa; the linear cutting blade H2 moves in the moving direction P along the cylindrical surface Wa; and the cutting ends when the end H2a leaves the generating line D. In the cutting using the second cutting tool T2, the same region L1 as the region of the cylindrical surface Wa cut using the linear cutting blade H1 is cut, as shown in FIG. 13(c). When the cutting using the second cutting tool T2 is complete, the cutting process is complete. Note that when cutting the workpiece W using the second cutting tool T2, the second cutting tool T2 may be temporarily prevented from being moved in the moving direction P and may be moved in the moving direction P after a predetermined time. Thus, the workpiece W, which has been released from the cutting using the linear cutting blade H1, is cut using the second cutting tool T2 only after being stabilized. As a result, the workpiece W can be machined with high accuracy.

Also in the present embodiment, the angle β1 of the linear cutting blade H2 is smaller than the angle α of the linear cutting blade H1. Thus, by performing main machining (rough machining) using the first cutting tool T1 and performing finish machining using the second cutting tool T2 as in the first embodiment, the workpiece W can be efficiently cut with high accuracy in a short time. Also, the workpiece W has already been released when cut using the linear cutting blade H2. Thus, as in the first embodiment, even if the amount of the workpiece W to be cut using the first cutting tool T1 is set to a large amount and an error occurs due to the warp or the like of the workpiece W, the workpiece W is finished by cutting it using the linear cutting blade H2 immediately. Thus, the entire cutting process including a finish is completed by moving the holder 225 once.

While there has been described the case in which the workpiece W is cut by moving the linear cutting blade H1 and the linear cutting blade H2 in the Y-direction, the workpiece W may be cut in other manners. The workpiece W may be cut by moving the linear cutting blade H1 and the linear cutting blade H2 in directions (moving directions) P1, P4 obtained by combining the positive Y-direction and the negative Z-direction.

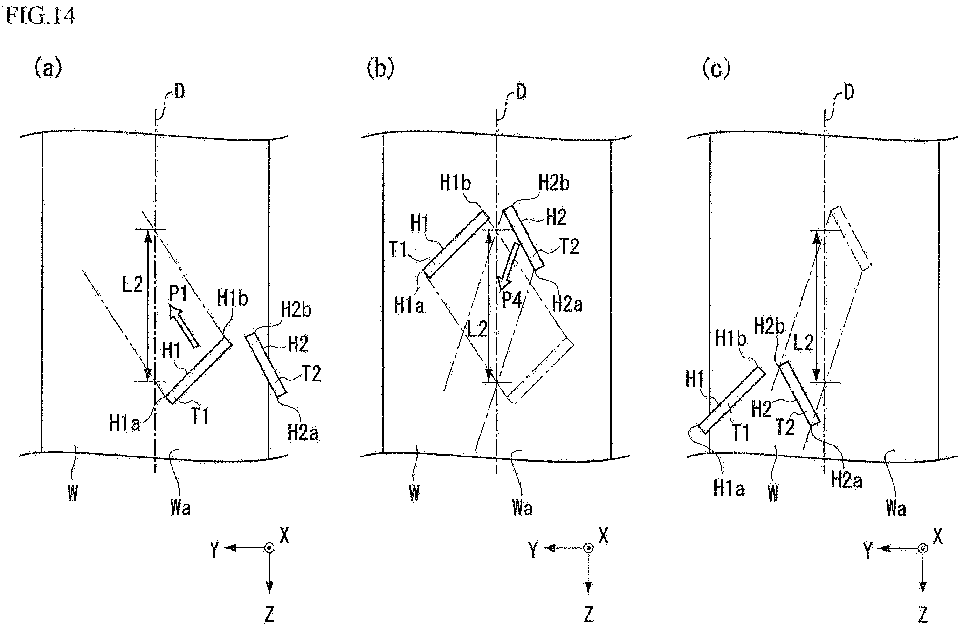

FIG. 14 includes drawings showing another example of the operation of the first cutting tool T1 and the second cutting tool T2 when the workpiece W is seen from the X-direction. First, the first cutting tool T1 is positioned. Then, as shown in FIG. 14(a), the workpiece W is cut using the first cutting tool T1 by moving the linear cutting blade H1 and the linear cutting blade H2 in the moving direction P1 (a direction obtained by combining the positive Y-direction and the negative Z-direction). Note that the movement of the first cutting tool T1 in the moving direction P1 is similar to that shown in FIG. 8 and therefore will not be described.

As shown in FIG. 14 (b), after the end H1b of the linear cutting blade H1 leaves the generating line D, the movement of the linear cutting blade H1 in the moving direction P1 is stopped before the end H2b of the linear cutting blade H2 reaches the generating line D. Then, the workpiece W is cut using the second cutting tool T2 by moving the linear cutting blade H1 and the linear cutting blade H2 in the moving direction P4 (a direction obtained by combining the positive Y-direction and the positive Z-direction). The cutting of the workpiece W using the second cutting tool T2 starts when the positive Y-side end H2b of the linear cutting blade H2 contacts the cylindrical surface Wa; the linear cutting blade H2 moves in the moving direction P4 along the cylindrical surface Wa; and the cutting ends when the end H2a leaves the generating line D, as shown in FIG. 14 (c). When the cutting using the second cutting tool T2 is complete, the cutting process is complete. The same region L2 as the region cut using the linear cutting blade H1 is cut by moving the linear cutting blade H2 in the moving direction P4.

As seen above, the second cutting tool T2 is disposed so as to be inclined in the direction opposite to the direction of the first cutting tool T1 with respect to the Z-direction. For this reason, there is no need to return the second cutting tool T2 to the cutting start position of the first cutting tool T1 in the positive Z-direction. Thus, the machining time can be reduced by the time required to move the second cutting tool T2 to the cutting start position, allowing the workpiece W to be cut in a short time.

Also in the operation of the first cutting tool T1 and the second cutting tool T2 shown in FIG. 14, the angle β1 of the linear cutting blade H2 is smaller than the angle α of the linear cutting blade H1. Thus, by performing main machining (rough machining) using the first cutting tool T1 and performing finish cutting using the second cutting tool T2 as in the first embodiment, the workpiece W can be efficiently cut with high accuracy in a short time. Also, the workpiece W has already been released when cut using the linear cutting blade H2. Thus, even if the amount of the workpiece W to be cut using the first cutting tool T1 is set to a large amount and thus an error occurs, the workpiece W is finished by cutting it using the linear cutting blade H2. This operation can be performed no matter whether the positions of the linear cutting blade H1 and the linear cutting blade H2 are the same in the positive X-direction or the linear cutting blade H2 protrudes by the protrusion amount XL. Also, as in the operation of the first cutting tool T1 and the second cutting tool T2 shown in FIG. 6, if the linear cutting blade H2 protrudes by the protrusion amount XL, the first cutting tool T1 and the second cutting tool T2 share the desired amount of the workpiece W to be cut.

As described above, according to the present embodiment, the first cutting tool T1 and the second cutting tool T2 are held by the holder 225, as in the first embodiment. Thus, when multiple cutting steps are performed on the workpiece W, for example, when main machining (rough machining) and finish machining are performed thereon, the moving distance of the cutting tools is reduced. As a result, it is possible to reduce the machining time while maintaining the machining accuracy. Also, the angles of the linear cutting blade H1 and the linear cutting blade H2 can be set to angles suitable for the respective types of machining. Thus, it is possible to machine the workpiece W with high accuracy such that the roughness of the cutting surface is reduced and in a short time.

While the embodiments have been described, the present invention is not limited thereto. Various changes can be made to the embodiments without departing from the spirit and scope of the present invention. For example, while the cases in which the same region of the workpiece W is cut using both the first cutting tool T1 and the second cutting tool T2 have been described in the embodiments, the workpiece W may be cut in other manners.

For example, the workpiece W may be cut using only one of the first cutting tool T1 and the second cutting tool T2. Also, different regions of the workpiece W may be cut using the first cutting tool T1 and the second cutting tool T2 as different tools. If only the first cutting tool T1 is used, the workpiece W is cut by moving the first cutting tool T1 from the cutting start position in the moving direction P or the like, and the movement of the first cutting tool T1 is stopped before the second cutting tool T2 reaches the workpiece W. If only the second cutting tool T2 is used, first, the first cutting tool T1 is caused to pass over the generating line D, by moving the holder 25, 125, or 225 in the moving direction P or the like with the first cutting tool T1 being away from the workpiece W in the X-direction. Then, the workpiece W is cut using only the second cutting tool T2 by positioning the second cutting tool T2 in the cutting start position and then moving it in the moving direction P or the like. The cutting start position of the second cutting tool T2 may be same as or different from the cutting start position of the first cutting tool T1. As seen above, the first cutting tool T1 and the second cutting tool T2 can be used as different tools. Thus, the types of cutting tools that can be mounted on the first turret 23 or the like can be increased. Examples of cutting tools held by the holder 25, 125, or 225 include rotary tools such as drills and end mills.

While, in the embodiments, the angle α of the linear cutting blade H1 is set to a greater angle than the angle β or β1 of the linear cutting blade H2, the angle α may be smaller than the angle β or β1 of the linear cutting blade H2.

While, in the embodiments, the workpiece W is cut by moving the first cutting tool T1 and the second cutting tool T2 with respect to the workpiece W (the main spindle 7, etc.), the workpiece W may be cut in other manners. For example, the workpiece W may be cut by fixing the first cutting tool T1 and the second cutting tool T2 and moving the workpiece W with respect to the first cutting tool T1 or the like in the Y-direction or in a direction obtained by combining the Y-direction and the Z-direction while rotating the workpiece W. In this case, the headstock 2 (see FIG. 1) for holding the workpiece W is formed so as to be movable in the Y-direction or in the direction obtained by combining the Y-direction and the Z-direction. Also, the workpiece W may be cut by moving the first cutting tool T1 and the second cutting tool T2 and the workpiece W.

While, in the embodiments, the two cutting tools, the first cutting tool T1 and the second cutting tool T2, are held by the holder 25, 125, or 225, three or more cutting tools may be held thereby. Also, the multiple cutting tools need not be held by the single holder 25, 125, or 225. The individual cutting tools may be held by different holders, and the linear cutting blades of the cutting tools may be disposed so as not to be parallel with each other, by combining the holders.

### Description of Reference Signs

M1...2-direction drive system (moving device)
M2...X-direction drive system (moving device)
M3...Y-direction drive system (moving device)
T1...first cutting tool (cutting tool)
T2...second cutting tool (cutting tool)
H1, H2...linear cutting blade
P, P1, P2, P3, P4...moving direction
7...main spindle
24, 124...tool head
25, 125, 225...holder
100, 200, 300...machine tool

## Claims

1. A machine tool comprising:
a main spindle that rotates while holding a workpiece;
a holder that holds a plurality of cutting tools including linear cutting blades for cutting the workpiece; and
a moving device that moves the cutting tools relative to the workpiece in a moving direction including at least a Y-direction perpendicular to both a Z-direction parallel with an axis of the main spindle and an X-direction that is perpendicular to the Z-direction and determines the amount of the workpiece to be cut, wherein
the holder holds the cutting tools in such a manner that the cutting tools are arranged along the moving direction in a state in which directions of the linear cutting blades are inclined with respect to the Z-direction when seen from the X-direction and are not to be parallel with each other.

2. The machine tool of Claim 1, wherein the holder holds the cutting tools in such a manner that an angle with respect to the Z-direction, of the linear cutting blade of the cutting tool disposed in front in the moving direction, of the cutting tools becomes greater than an angle with respect to the Z-direction, of the linear cutting blade of the cutting tool disposed in the rear in the moving direction, thereof.

3. The machine tool of Claim 1 or 2, wherein the moving direction is the Y-direction, or a direction obtained by combining the Z-direction and the Y-direction.

4. The machine tool of any one of Claims 1 to 3, wherein the holder holds the cutting tools in such a manner that positions of the linear cutting blades are the same in the X-direction.

5. The machine tool of any one of Claims 1 to 4, wherein the holder holds the cutting tools in such a manner that the linear cutting blade of the cutting tool disposed in the rear in the moving direction, of the cutting tools protrudes in the X-direction toward the workpiece compared to the linear cutting blade of the cutting tool disposed in front in the moving direction, thereof.

6. The machine tool of any one of Claims 1 to 3, wherein the holder holds the cutting tools in such a manner that the cutting tools are spaced from each other in the Y-direction so that a front end of the linear cutting blade of the cutting tool disposed in the rear in the moving direction, of the cutting tools is disposed in the rear in the moving direction compared to a rear end of the linear cutting blade of the cutting tool disposed in front in the moving direction, thereof.

7. The machine tool of Claim 1, wherein the linear cutting blades of the cutting tools have the same lengths perpendicular to the moving direction.

8. A method for cutting the workpiece using the machine tool of any one of Claims 1 to 7, comprising cutting the workpiece using the cutting tool disposed in front in the moving direction, of the cutting tools and then cutting the workpiece using the cutting tool disposed in the rear in the moving direction, thereof.

9. The cutting method of Claim 8, wherein main machining is performed on the workpiece using the cutting tool disposed in front in the moving direction, and finish machining is performed on the workpiece using the cutting tool disposed in the rear in the moving direction.

10. The cutting method of Claim 8 or 9, comprising if the moving direction is the direction obtained by combining the Z-direction and the Y-direction, adjusting angles with respect to the Z-direction, of the linear cutting blades disposed in front and in the rear in the moving direction on the basis of the amount of movement in the Z-direction prior to cutting the workpiece.
